# EUROPÄISCHE PATENTANMELDUNG

(11) **EP 2 544 202 A2**
(43) Veröffentlichungstag der Anmeldung: **09.01.2013**
(21) Anmeldenummer: 12171257.4
(22) Anmeldetag: 08.06.2012
(51) Int. Cl.: H01F 7/128

(54) **Magnetspulenanordnung und Kollektion von Magnetspulenanordnungen**

(30) Priorität: 05.07.2011 DE 102011106553
(71) Anmelder: Robert Bosch GmbH, 70442 Stuttgart (DE)
(72) Erfinder: Malagoli, Uber, 42100 Reggio Emilia (IT)
(74) Vertreter: Maiß, Harald

(57) **Zusammenfassung**

Offenbart ist eine Magnetspulenanordnung für elektromagnetisch betätigte Ventile mit einer Spule. Diese ist über einen Sockel mit einer Stromquelle elektrisch verbindbar. Der Sockel ist hierbei im Wesentlichen zweiteilig mit einem Spulen- und einem Anschlussteil aufgebaut. An Kontakte des Anschlussteils ist eine Stromquelle anschließbar, während das Spulenteil elektrisch mit der Spule verbundene Kontakte aufweist. Das Anschluss- und das Spulenteil werden zum elektrischen und mechanischen Verbinden über eine Verbindungsvorrichtung verbunden. Des Weiteren ist eine Kollektion von Magnetspulenanordnungen vorgesehen, bei denen die Spulenteile des Sockels unterschiedliche Baugrößen und/oder die Anschlussteile verschiedene elektrische Anschlüsse zum Anschluss einer Stromquelle aufweisen. Die elektrische und/oder mechanische Verbindung zwischen dem Spulen- und dem Anschlussteil ist bei allen Magnetspulenanordnungen identisch ausgebildet.

## Beschreibung

Die Erfindung betrifft eine Magnetspulenanordnung und eine Kollektion von Magnetspulenanordnungen für elektromagnetisch betätigte hydraulische Ventile.

In dem Datenblatt RE 18325-90/02.10 von Rexroth sind derartige Magnetspulenanordnungen offenbart. Eine jeweilige Magnetspulenanordnung weist einen mit einer Wicklung versehenen Spule auf, die mit Kunststoff umspritzt ist. Zum elektrischen Verbinden der Spule mit einer Stromquelle hat diese einen Sockel mit einem elektrischen Anschluss, wobei der Sockel einstückig mit der Spule verbunden ist. Die Magnetspulenanordnung ist in dem Datenblatt in einer Vielzahl von Ausführungen offenbart, mit unterschiedlichen Größen, Versorgungsspannungen und Anschlüssen. Die Magnetspulenanordnung ist insbesondere in den Größen S8, S5, S7, R5, R7, mit den Versorgungsspannungen 12 V-DC, 24 V-DC, 26 V-DC, 24 V-AC, 110 V-AV, 230 V-AC und mit den Anschlüssen für die Stromquelle DIN 43650, Single-Lead, Amp-Junior, Amp-Superseal, Deutsch DT-04 erhältlich. Wird die Magnetspulenanordnung mit einer Wechselstromquelle eingesetzt, so sind zusätzlich Gleichrichter in Form von Dioden notwendig, die im Sockel integriert sind.

Nachteilig hierbei ist, dass die Vielzahl von unterschiedlichen Ausführungen der Magnetspulenanordnungen zu hohen Herstellungskosten führen.

Demgegenüber liegt der Erfindung die Aufgabe zugrunde, eine Magnetspulenanordnung zu schaffen, die einfach und kostengünstig herstellbar ist. Eine weitere Aufgabe der Erfindung ist es eine Kollektion für eine Magnetspulenanordnung bereitzustellen, die ebenfalls geringe Herstellungskosten bei einer hohen Variantenvielfalt aufweist.

Die Aufgabe wird hinsichtlich der Magnetspulenanordnung gemäß den Merkmalen des Patentanspruchs 1 und gemäß der Kollektion von Magnetspulenanordnungen gemäß den Merkmalen des Patentanspruchs 15 gelöst.

Sonstige vorteilhafte Weiterbildungen der Erfindung sind Gegenstand der Unteransprüche.

Erfindungsgemäß hat eine Magnetspulenanordnung für elektromagnetisch betätigte Ventile eine gekapselte Spule. Zur elektrischen Kontaktierung der Spule ist diese über einen Sockel an einer Stromquelle anschließbar. Der Sockel ist hierbei zweiteilig mit einem Anschlussteil und einem Spulenteil aufgebaut, in denen jeweils Strompfade zur Verbindung der Spule mit der Stromquelle ausgebildet sind. Die Strompfade des Anschlussteils sind hierbei mit der Stromquelle elektrisch verbindbar, und die Strompfade des an der Spule festgelegten Spulenteils sind mit der Spule elektrisch verbunden. Vorteilhafterweise ist das Anschlussteil mit dem Spulenteil über eine Verbindungsvorrichtung elektrisch und mechanisch verbindbar.

Diese Lösung hat den Vorteil, dass im Unterschied zum Stand der Technik der Sockel zweiteilig mit einem Anschluss- und einem Spulenteil ausgestaltet ist, die über eine Verbindungsvorrichtung verbindbar sind. Das Anschlussteil, das beispielsweise als ein DIN 43650, Single-Lead, Amp-Junior, Amp-Superseal oder Deutsch DT-04 ausgebildet sein kann, ist somit völlig unabhängig vom mit der Spule verbundenen Socketeil herstellbar. Die Herstellung des Spulenteils und des Anschlussteils kann hierbei im Unterschied zum Stand der Technik von verschiedenen Herstellern stammen, wodurch die Herstellungskosten drastisch gesenkt werden.

Des Weiteren ist beispielsweise bei einer Beschädigung des Anschlussteils nicht notwendig die gesamte Magnetspulenanordnung auszutauschen sondern lediglich das Anschlussteil.

In weiterer Ausgestaltung der Erfindung ist die Verbindungsvorrichtung zwischen dem Spulenteil und dem Anschlussteil standardisiert. Dies führt vorteilhafter Weise dazu, dass unterschiedliche Anschlussteile und/oder Spulenteile miteinander verbindbar sind, wodurch die Magnetspulenanordnung äußerst flexibel und kostengünstig herstellbar ist.

Mit Vorteil hat das Spulenteil zwei Kontaktelemente, die insbesondere radial zur Spulenachse aus diesem auskragen, wobei die Kontaktelemente kraftschlüssig mit zwei Kontaktelementen des Anschlussteils zur elektrischen Kontaktierung der Strompfade über geeignete Mittel verbindbar sind. Hierdurch ist es nicht erforderlich, die Kontaktelemente kostenintensiv durch verlöten oder verschweißen zu verbinden. Des Weiteren sind die Kontaktelemente bei einer Demontage des Sockels einfach voneinander lösbar.

Vorzugsweise sind Kontaktflächen der Kontaktelemente des Anschlussteils größer als Kontaktflächen der Kontaktelemente des Spulenteils. Hierdurch sind das Anschlussteil und das Spulenteil relativ zueinander flexibler anordbar, da die Kontaktelemente des Spulenteils über einen großen Flächenbereich mit den Kontaktelementen des Anschlussteils verbindbar sind. Umgekehrt ist es auch möglich, dass die Kontaktflächen des Spulenteils größer als die des Anschlussteils sind. Des Weiteren könnten auch eine Kontaktfläche des Anschlussteils und eine Kontaktfläche des Spulenteils größer als das jeweils zu kontaktierende Kontaktelement des anderen Teils sein. Die Kontaktflächen des Spulen- und des Anschlussteils haben somit eine derartige Größe, dass eine Relativverschiebung der beiden Teile zueinander erst ab einer bestimmten Größe des Verschiebewegs zur Unterbrechung des elektrischen Kontakts führt.

Bevorzugterweise sind die Kontaktflächen der Kontaktelemente des Anschlussteils halbringförmig etwa in einer Ebene ausgebildet. Die Kontaktflächen sind dann auf einem gemeinsamen Ringradius angeordnet. Sind die Kontaktelemente des Spulenteils dann beispielsweise als Kontaktfahnen oder als Kontaktstifte ausgebildet, so sind diese über die gesamte halbringförmige Fläche jeweils mit dem jeweiligen Kontaktelement des Anschlussteils kontaktierbar.

Der Anschlussteil und der Spulenteil sind vorzugsweise über eine kostengünstige Schraubverbindung miteinander mechanisch verbunden.

Mit Vorteil hat das Anschlussteil eine oder mehrere Durchgangsbohrungen zur Durchführung von Schrauben und das Spulenteil hat eine oder mehrere Bohrungen zur Schraubverbindung der beiden Teile. Die Durchgangsbohrungen und/oder die Bohrungen sind dabei derart angeordnet, dass das Anschlussteil und das Spulenteil relativ zueinander in unterschiedlichen Positionen verschraubbar sind.

In weiterer Ausgestaltung der Erfindung sind die Bohrungen des Spulenteils auf einem die Kontaktelemente umgreifenden Teilkreis angeordnet. Eine Durchgangsbohrung des Anschlussteils kann dann mehreren Bohrungen zum Verschrauben zugeordnet werden, wobei das Spulenteil und das Anschlussteil dann beispielsweise relativ zueinander um eine Teilkreisachse in einer Mehrzahl von Positionen verschraubt werden können.

Eine Mehrzahl von Durchgangsbohrungen des Anschlussteils kann auch auf einem die Kontaktelement des Anschlussteils umgreifenden Teilkreis angeordnet sein.

Zur formschlüssigen Halterung des Spulenteils und des Anschlussteils in zumindest einer Ebene hat das Anschlussteil einen Außenbund, der im Wesentlichen bündig in eine Bundaufnahme des Spulenteils einsetzbar ist. Die Kontaktelemente des Anschlussteils sind hierbei vorzugsweise innerhalb des Außenbunds und die des Spulenteils innerhalb der Bundaufnahme angeordnet.

Insbesondere zur Vorzentrierung des Anschlussteils auf dem Spulenteil bei der Montage ist beim Außenbund des Anschlussteils auf der zum Spulenteil weisenden Seite ein Zentrierstift ausgebildet, der in eine Bohrung des Spulenteils eintauchbar ist.

Zum Schutz der Kontaktierung vor äußeren Einflüssen sind das Anschlussteil und das Spulenteil zusätzlich oder alternativ zur Schraubverbindung verschweißt, insbesondere durch Ultraschallschweißen.

Ebenfalls zum Schutz vor äußeren Einflüssen kann zwischen dem Anschlussteil und dem Spulenteil ein Dichtring, insbesondere eine O-Ring, angeordnet sein.

Erfindungsgemäß ist eine Kollektion von vorbeschriebenen Magnetspulenanordnungen vorgesehen. Die Spulenteile weisen hierbei unterschiedliche Baugrößen und/oder die Anschlussteile weisen unterschiedliche elektrische Anschlüsse für die Stromquelle auf. Die elektrische und/oder mechanische Verbindung zwischen Spulenteil und Anschlussteil kann hierbei bei allen Magnetspulenanordnungen der Kollektion identisch ausgebildet sein.

Dies führt vorteilhafter Weise zu äußerst geringen Lagerkosten, da beispielsweise ein Spulenteil mit einer Mehrzahl von Anschlussteilen verbindbar ist, wodurch die Anzahl der zu lagernden Bauteile, um eine ausreichenden Variantenvielfalt Bereitzustellen, drastisch sinkt.

Im Folgenden wird die Erfindung anhand schematischer Zeichnungen näher erläutert. Es zeigen:
Figur 1 in einer perspektivischen Darstellung eine Magnetspulenanordnung gemäß einem ersten Ausführungsbeispiel;
Figur 2 in einer perspektivischen Darstellung die Magnetspulenanordnung gemäß dem ersten Ausführungsbeispiel;
Figur 3 bis 6 jeweils in einer perspektivischen Darstellung Bauteile eines Spulteils der Magnetspulenanordnung gemäß einem zweiten Ausführungsbeispiel;
Figur 7 bis 12 jeweils in einer perspektivischen Darstellung ein Anschlussteil für die Magnetspulenanordnung gemäß dem zweiten Ausführungsbeispiel; und
Figur 13 in einer perspektivischen Darstellung die Magnetspulenanordnung gemäß dem zweiten Ausführungsbeispiel.

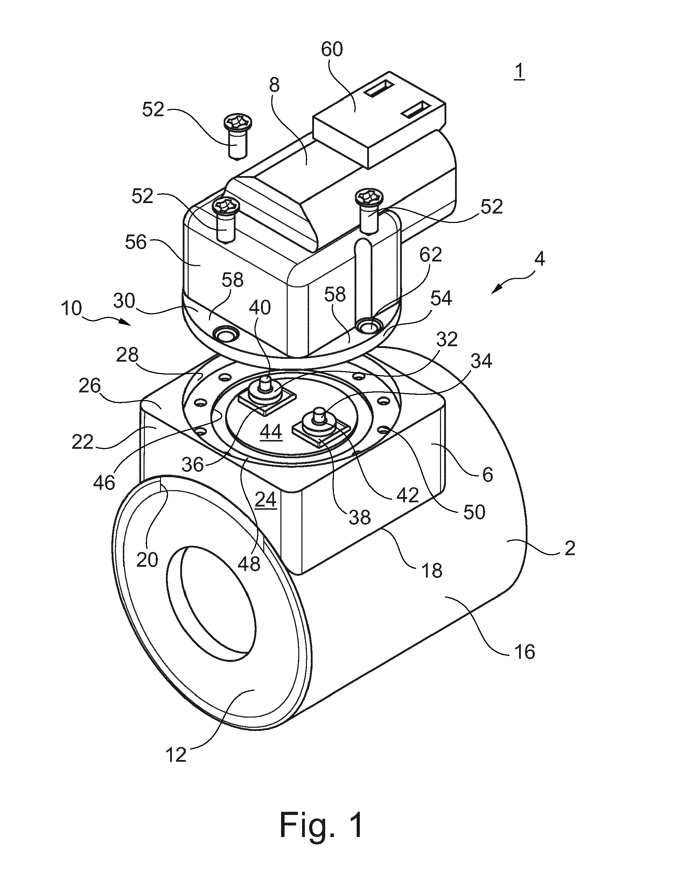

Figur 1 zeigt in einer perspektivischen Explosionsdarstellung eine Magnetspulenanordnung 1 für elektromagnetisch betätigte hydraulische Ventile gemäß einem ersten Ausführungsbeispiel. Diese hat eine gekapselte Spule 2 mit einem Sockel 4 zum Anschluss der Spule 2 an eine Stromquelle. Der Sockel 4 hat ein mit der gekapselten Spule 2 fest verbundenes Spulenteil 6 und ein mit diesem über eine Schraubverbindung verbindbares Anschlussteil 8.

Das Spulen- und Anschlussteil 6, 8 sind über eine standardisierte Verbindungsvorrichtung 10 miteinander mechanisch verbunden und elektrisch kontaktiert. Durch die Standardisierung der Verbindungsvorrichtung 10 können unterschiedlich ausgestaltete Spulen 2 mit Spulenteilen 6 mit unterschiedlich ausgestalteten Anschlussteilen 8 verbunden werden. Die Spule 2 hat beispielsweise entsprechend dem Datenblatt RD 18325-90/02.10 von Rexroth unterschiedliche Größen, wie beispielsweise S8, S5, S7, R5 oder R7. Die Versorgungsspannung der Spule 2 kann hierbei beispielsweise 12 V-DC, 24 V-DC, 26 V-DC, 24 V-AC, 110 V-AV oder 230 V-AC betragen. Zum Anschließen der Spule 2 an eine Stromquelle sind beispielsweise die Anschlüsse DIN 43650, Single-Lead, Amp-Junior, Amp-Superseal oder Deutsch DT-04 verwendbar. Die Anschlüsse sind im Stand der Technik in die Magnetspulenanordnung einstückig integriert, wodurch die Herstellung derartiger Magnetspulenanordnungen durch einen einzigen Hersteller erfolgen muss. Durch die Trennung des Sockels 4 in ein Spulenteil 6 und ein Anschlussteil 8, die über eine Standardisierung miteinander verbindbar sind, ist es zum einen möglich, die Spule 2 zusammen mit dem Spulenteil 6 unabhängig vom Anschlussteil 8 herzustellen und des Weiteren einen bestimmten Spulentyp auf einfache Weise mit unterschiedlichen Anschlüssen auszubilden. Das Anschlussteil 8 in der Figur 1 ist hierbei als Deutsch DT-04 ausgestaltet.

Die gekapselte Spule 2 weist einen nicht dargestellten Spulenkörper auf, der mit Kunststoff umspritzt ist. Des Weiteren ist die Spule 2 etwa hohlzylindrisch ausgebildet und weist zwei Ringstirnflächen 12 und 14 auf. Der mit Kunststoff umspritzte Spulenkörper wird von einem Spulenmantel 16 aus Metall umgriffen. Etwa Radial zu einer Spulenlängsachse der Spule 2 ist der Sockel 4 mit dem Spulenteil 6 angeordnet. Das Spulenteil 6 hat hierbei eine zur Spule 2 weisende Unterseite 18, deren Querschnitt, quer zur Längsrichtung der Spule 2 gesehen, abschnittsweise einen Teilkreis umgreift, dessen Radius etwa einem Außenradius des Spulenmantels 16 entspricht. Der Spulenmantel 16 hat im Bereich der Unterseite 18 eine Aussparung 20, über die das Spulenteil 6 mit der gekapselten Spule 2 verbunden ist. Eine Umfangsfläche 22 des Spulenteils 6 hat eine im Wesentlichen quadratische Querschnittsform, wobei eine Vorderseite 24 etwa in einer Ebene mit der Ringstirnfläche 12 der Spule 2 liegt. Eine Breite der Vorderseite 24 ist dabei etwas geringer als ein Außendurchmesser des Spulenmantels 16. In eine von der Spule 2 weg weisende Oberseite 26 des Spulenteils 6 ist eine einen kreisförmigen Querschnitt aufweisende Aussparung 28 bzw. Bundaufnahme eingebracht, in die ein Außenbund 30 des Anschlussteils 8 eintauchbar ist. Die Oberseite 26 erstreckt sich hierbei quer zur Ebene, in der die Ringstirnfläche 12 angeordnet ist. Innerhalb der Aussparung 28 des Spulenteils 6 kragen aus der Oberseite 26 zwei Kontaktelemente 32, 34 aus, die elektrisch mit der Spule 2 verbunden sind. Die Kontaktelemente 32 und 34 sind als Kontaktfahnen ausgebildet, die sich von der Oberseite 26 her durch das Spulenteil 6 hindurch bis zur Spule 2 erstrecken. Endabschnitte 36 und 38 der als Kontaktfahnen ausgebildeten Kontaktelemente 32 bzw. 34 erstrecken sich etwa parallel zur Oberseite 26 und sind im Bereich eines Aussparungsgrunds 44 der Aussparung 28 angeordnet. Die Endabschnitte 36 und 38 sind voneinander beabstandet und weisen eine Symmetrieebene auf, die von der Längsachse der Spule 2 und einer Längsachse der Aussparung 28 gebildet ist. In einer jeweiligen von der Spule 2 weg weisenden Oberseite der Endabschnitte 36 und 38 der Kontaktelemente 32 bzw. 34 ist ein Kontaktstift 40 bzw. 42 fest angeordnet, dessen Achsen sich im Parallelabstand zur Längsachse der Aussparung 28 erstrecken. In den Aussparungsgrund 44 ist eine die Endabschnitte 36 und 38 umgreifende Ringaussparung 46 zur Aufnahme eines O-Rings eingebracht. Durch die Ringaussparung 46 ist der Aussparungsgrund 44 in eine außen liegende Ringfläche 48 und eine innen liegende Kreisfläche unterteilt. Von der Ringfläche 48 her sind in dem Aussparungsgrund 44 zwölf auf einem Teilkreis liegende Bohrungen 50 eingebracht, von denen in der Figur 1 der besseren Darstellbarkeit halber nur eine mit einem Bezugszeichen versehen ist. Die Bohrungen 50 dienen zur Aufnahme einer Schraube 52, um das Anschlussteil 8 mit dem Spulenteil 6 zu verschrauben.

Der Außenbund 30 des Anschlussteils 8 hat eine im Wesentlichen kreiszylindrische Außenmantelfläche 54, deren Radius im Wesentlichen dem Radius der Aussparung 28 des Spulenteils 6 entspricht, womit der Außenbund 30 bündig in diese eintauchen kann. Eine Höhe des Außenbunds 30 entspricht etwa einer Tiefe der Aussparung 28, wobei deren Tiefe von der Oberseite 26 bis zum Aussparungsgrund 44 gemessen wird. Auf einer Oberseite des Außenbunds 30 ist ein einen etwa quadratischen Querschnitt aufweisender Gehäuseabschnitt 56 des Anschlussteils 8 ausgebildet, wodurch auf der Oberseite des Außenbunds 30 vier kreissegmentförmige Bundflächen 58 gebildet sind, von denen zwei in der Figur 1 dargestellt sind. Im Gehäuseabschnitt 56 ist eine Steckerbuchse 60 ausgebildet, die sich etwa quer zur Längsrichtung des Anschlussteils 8 erstreckt und zum Anschluss einer Stromquelle dient. Die Steckerbuchse 60 überdeckt hierbei eine in der Figur 1 nicht dargestellte kreissegmentförmige Bundfläche 58. In den anderen drei Bundflächen 58 ist jeweils etwa mittig eine Durchgangsbohrung 62 mit einer Senkung zur Durchführung der Schrauben 52 eingebracht. Die Durchgangsbohrungen 62 sind somit auf einem Teilkreis etwa 90° zueinander versetzt angeordnet.

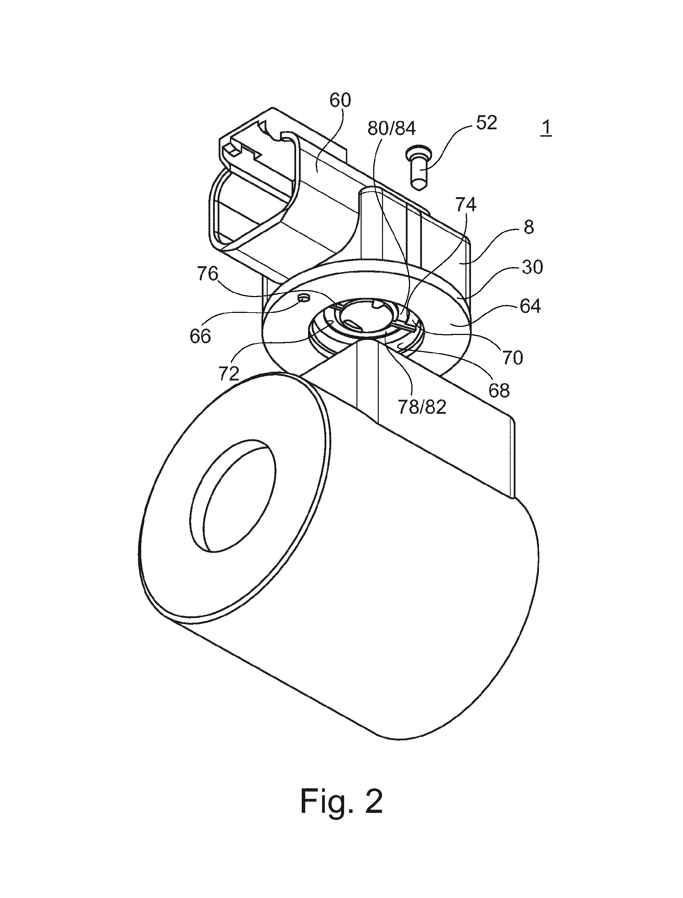

Figur 2 zeigt die Magnetspulenanordnung 1 perspektivisch in einer Explosionsdarstellung etwa in Richtung einer Unterseite 64 des Außenbunds 30 des Anschlussteils 8. Die Durchgangsbohrungen 62 aus Figur 1 sind der Einfachheit halber in Figur 2 nicht dargestellt. An der Unterseite 64 ist ein Zentriervorsprung 66 ausgebildet, der im verbundenen Zustand des Anschlussteils 8 mit dem Spulenteil 6 in eine Bohrung 50 des Spulenteils 6 aus Figur 1 eingetaucht ist, um das Anschlussteil 8 am Spulenteil 6 in einer Umfangsrichtung des Außenbunds 30 festzulegen. Der Zentriervorsprung 66 ist hierbei auf dem Teilkreis der Durchgangsbohrungen 62 aus Figur 1 angeordnet, wobei er um 90° zu seinen benachbarten Durchgangsbohrungen 62 versetzt ist und auf dem von der Steckerbuchse 60 überdeckten kreissegmentförmigen Bundfläche abweisenden Abschnitt an der Unterseite 64 angeordnet ist. Die Unterseite 64 ist kreisringförmig ausgebildet, wobei eine Ringbreite derart gewählt ist, dass im zusammengesetzten Zustand des Anschlussteils 8 mit dem Spulenteil 6 die Unterseite 64 auf der Ringfläche 48 im Wesentlichen anliegt und die Ringaussparung 46 im Wesentlichen überdeckt, wobei ein in diese eingesetzter O-Ring fest und dichtend zwischen dem Anschlussteil 8 und dem Spulenteil 6 gehaltert ist.

In das Anschlussteil 8 ist von der Unterseite 64 her eine Aussparung 68 eingebracht. Diese ist im Wesentlichen mit einem kreiszylindrischen Querschnitt ausgebildet. In eine Bodenfläche 70 der Aussparung 68 sind zwei halbringförmige Aussparungen 72, 74 eingebracht, die jeweils einen Teilkreis mit gleichem Radius umgreifen, dessen Mittelpunkt etwa in einer Längsachse der kreisringförmigen Unterseite 64 liegt. Die Aussparungen 72, 74 sind dabei von einem die Aussparung 68 etwa diagonal durchsetzenden Steg 76 voneinander getrennt. Eine Höhe des Stegs 76 ist dabei wesentlich geringer als eine Tiefe der Aussparung 68. In die halbringförmigen Aussparungen 72 und 74 ist jeweils ein Kontaktelement 78 bzw. 80 mit einer halbringförmigen Kontaktfläche 82 bzw. 84 eingesetzt. Ein jeweiliges Kontaktelement 78, 80 erstreckt sich durch das Anschlussteil 8 zur Steckerbuchse 60, wo diese mit einem Stecker kontaktierbar sind. Im verbundenen Zustand des Anschlussteils 8 mit dem Spulenteil 6 liegen die Kontaktstifte 40 und 42 aus Figur 1 mit ihren stirnseitigen Kontaktflächen an den Kontaktflächen 84 bzw. 82 an und sind mit diesen kraftschlüssig verbunden, indem das Spulenteil 6 mit dem Anschlussteil 8 durch die Schrauben 52 mechanisch fest verbunden ist.

Zum Verbinden des Spulenteils 6 mit dem Anschlussteil 8 wird letzteres mit seinem Außenbund 30 in die Aussparung 68 gesetzt, wobei die Teile 6 und 8 derart zueinander angeordnet sind, dass der Zentriervorsprung 66 in eine der Bohrungen 50 eintaucht. Im Anschluss daran wird das Anschlussteil 8 über zumindest eine Schraube 52 mit dem Spulenteil 6 verschraubt. Durch die zwölf Bohrungen 50 kann das Anschlussteil 8 mit seiner Steckerbuchse 60 entsprechend der Anordnung der Bohrungen 50 relativ zum Spulenteil 6 angeordnet werden.

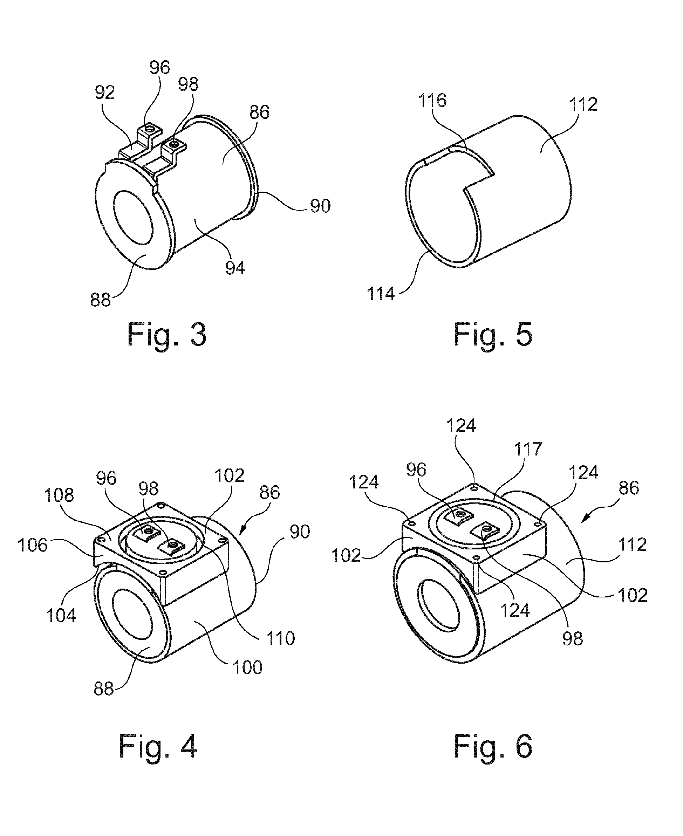

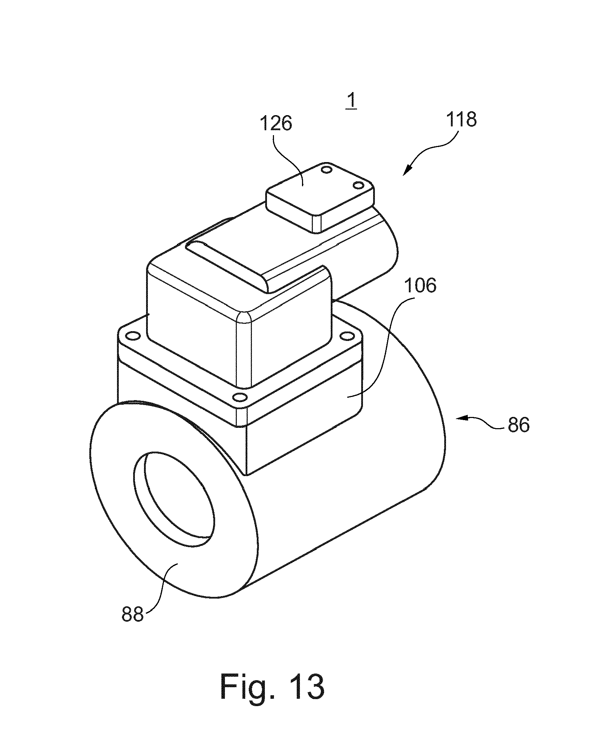

In den Figuren 3 bis 12 sind Bauteile einer zweiten Ausführungsform einer Magnetspulenanordnung jeweils in einer perspektivischen Ansicht offenbart, während in der Figur 13 in einer perspektivischen Darstellung eine zusammengesetzte Magnetspulenanordnung 1 gemäß dem zweiten Ausführungsbeispiel dargestellt ist.

Figur 3 zeigt in einer perspektivischen Darstellung einen mit einer Wicklung versehenen Spulenkörper 86. Dieser ist stirnseitig jeweils mit einem Kunststoffring 88 und 90 begrenzt. Von einer zur Wicklung weisenden Seite des in der Figur 3 vorderen Kunststoffrings 88 erstrecken sich zwei Kontaktfahnen 92, 94 bzw. Kontaktelemente, wobei eine jeweilige Kontaktfahne 92 bzw. 94 mit einem Wicklungsende der Wicklung verbunden ist. Eine jeweilige Kontaktfahne 92 bzw. 94 ist dreifach abgewinkelt, wodurch ein jeweiliger erster mit der Wicklung verbundener Abschnitt sich etwa quer zur Längsrichtung des Spulenkörpers 86 erstreckt und ein jeweiliger Endabschnitt sich etwa in Längsrichtung weg vom vorderen Kunststoffring 88 erstreckt.

Figur 4 stellt einen vollständig mit Kunststoff umspritzten Spulenkörper 86 dar, der einen von den Kunststoffringen 88 und 90 stirnseitig begrenzten Kunststoffmantel 100 aufweist. Dieser ist mit einem Spulenteil 102 eines Sockels verbunden. Das Spulenteil 102 hat eine dem Spulenteil 6 aus Figur 1 entsprechende Unterseite 104 und Außenmantelfläche 106. Die Unterseite 104 ist abschnittsweise mit Randbereichen vom Kunststoffmantel 100 beabstandet und über einem mittleren Bereich mit diesem fest verbunden. An einer Oberseite 108 des Spulenteils 102 kragen die Endabschnitte 96 und 98 der Kontaktfahnen 92 bzw. 94 aus Figur 3 aus, die sich etwa parallel zur Oberseite 108 erstrecken und an dieser im Wesentlichen anliegen. Die Endabschnitte 96 und 98 sind hierbei von einer in die Oberseite 108 eingebrachten Ringaussparung 110 umgriffen, die zum Einsetzen eines O-Rings dient.

In Figur 5 ist ein Spulenmantel 112 gezeigt, der im Wesentlichen dem Spulenmantel 16 aus der Figur 1 entspricht. Dieser hat eine von seiner in der Figur 5 vorderen ringförmigen Stirnseite 114 her eingebrachte Aussparung 116, die eine etwa U-förmige Umfangswandung aufweist, mit zwei sich gegenüberliegenden und sich etwa in Längsrichtung erstreckenden Flächen und eine im Parallelabstand zur Stirnseite 114 liegenden Fläche. Der Spulenmantel 112 wird bei der Montage von dem hinteren Kunststoffring 90 des Spulenkörpers 86, siehe Figur 4, in Richtung des vorderen Kunststoffrings über den Kunststoffmantel 100 geschoben, wobei die Aussparung 116 im Bereich der Unterseite 104 des Spulenteils 102 angeordnet ist.

Figur 6 stellt in einer perspektivischen Darstellung den Spulenkörper 86 zusammen mit dem Spulenmantel 112 dar. Die Flächen der Aussparung 116 des Spulenmantels 112 aus Figur 5 umgreifen hierbei den mit dem Kunststoffmantel 100 verbundenen Abschnitt der Unterseite 104 des Spulenteils 102, während der von dem Kunststoffmantel 100 beabstandete Abschnitt der Unterseite 104 im Wesentlichen auf dem Spulenmantel 112 anliegt. Des Weiteren ist in der Figur 6 ein O-Ring 117 in die Ringaussparung 110 aus Figur 4 eingesetzt.

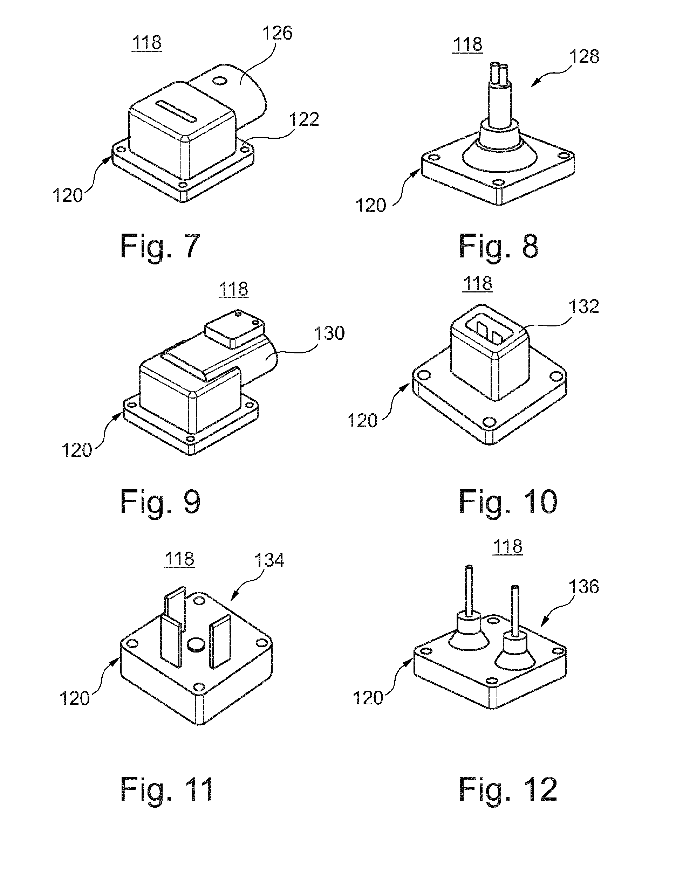

Figuren 7 bis 12 zeigen jeweils in einer perspektivischen Darstellung ein Anschlussteil 118 eines Sockels, die eine einheitliche Verbindungsvorrichtung 120 aufweisen, über die diese mit dem Spulenteil 102 aus der Figur 6 elektrisch und mechanisch verbindbar sind. Die Verbindungsvorrichtung 120 hat jeweils einen im Wesentlichen rechteckförmigen Querschnitt, wobei in dessen Eckbereichen jeweils eine Durchgangsbohrung 122 ausgebildet ist, wobei der besseren Darstellbarkeit halber nur eine Durchgangsbohrung 112 des Anschlussteils 118 in Figur 7 mit einem Bezugszeichen versehen ist. Eine jeweilige Durchgangsbohrung 122 der Anschlussteile 118 ist etwa koaxial zu einer jeweiligen Gewindebohrungen 124 des Spulenteils 102 aus Figur 6 anordbar, die im Wesentlichen im Eckbereich des Spulenteils 102 ausgebildet sind. An Unterseiten der Anschlussteile 118 aus den Figuren 7 bis 12 sind nicht dargestellte Kontaktelemente vorgesehen, die derart ausgestaltet sind, dass eine kraftschlüssige Kontaktierung mit den Endabschnitten 96 und 98 der Kontaktfahnen 92 bzw. 94 aus Figur 6 im montierten Zustand erfolgt. Die Kontaktelemente sind beispielsweise entsprechend der Figur 2 halbringförmig ausgebildet.

Ein jeweiliges Anschlussteil 118 ist mit dem Spulenteil 102 aus Figur 6 in vier unterschiedlichen Positionen verschraubbar.

Ein Anschluss 126 des Anschlussteils 118 aus Figur 7 ist als Amp-Superseal ausgebildet. Bei einem Anschluss 128 des Anschlussteils 118 aus Figur 8 handelt es sich um einen Single Lead. Ein Anschluss 130 des Anschlussteils 118 aus Figur 9 ist als Deutsch DT-04 ausgebildet. Beim Anschluss 132 des Anschlussteils 118 aus Figur 10 handelt es sich um einen Amp-Junior. Ein in der Figur 11 dargestellte Anschluss 134 des Anschlussteils 118 ist als DIN 43650 ausgebildet, bei dem ein zusätzlicher Schutzleiteranschluss vorgesehen ist. Das Anschlussteil 118 aus Figur 12 hat einen mit zwei Stromanschlüssen ausgebildeten Anschluss 136. Die Anschlussteile 118 der Figuren 7 bis 12 können eine Diode aufweisen, falls die damit elektrisch kontaktierte Spule mit Wechselstrom betrieben wird.

Durch die standardisierte Verbindungsvorrichtung 120 der Anschlussteile 118 sind diese vorteilhafterweise alle mit dem Spulenteil 102 aus Figur 6 verbindbar. Somit können hierbei beispielsweise sechs Magnetspulenanordnungen mit unterschiedlichen Anschlüssen zur Verfügung gestellt werden, wobei das Spulenteil 102 gleich ist.

Figur 13 stellt den Anschluss 118 im verschraubten Zustand mit dem Spulenteil 106 dar. In dieser Darstellung weist der Anschluss 126 etwa in Längsrichtung des Spulenkörpers 86 weg vom Kunststoffring 88. Wie oben bereits beschrieben, kann der Anschluss 126 auch entgegen der gezeigten Richtung angeordnet werden oder quer dazu.

Durch die verschiedenen Anschlussteile 118 aus den Figuren 7 bis 12 zusammen mit dem Spulenteil 102 aus Figur 6 ist eine Kollektion von Magnetspulenanordnungen geschaffen. Deren Verbindungsvorrichtung 120 ist identisch.

Offenbart ist eine Magnetspulenanordnung für elektromagnetisch betätigte Ventile mit einer Spule. Diese ist über einen Sockel mit einer Stromquelle elektrisch verbindbar. Der Sockel ist hierbei im Wesentlichen zweiteilig mit einem Spulen- und einem Anschlussteil aufgebaut. An Kontakte des Anschlussteils ist eine Stromquelle anschließbar, während das Spulenteil elektrisch mit der Spule verbundene Kontakte aufweist. Das Anschluss- und das Spulenteil werden zum elektrischen und mechanischen Verbinden über eine Verbindungsvorrichtung verbunden. Des Weiteren ist eine Kollektion von Magnetspulenanordnungen vorgesehen, bei denen die Spulenteile des Sockels unterschiedliche Baugrößen und/oder die Anschlussteile verschiedene elektrische Anschlüsse zum Anschluss einer Stromquelle aufweisen. Die elektrische und/oder mechanische Verbindung zwischen dem Spulen- und dem Anschlussteil ist bei allen Magnetspulenanordnungen identisch ausgebildet.

### Bezugszeichenliste

- 1: Magnetspulenanordnung
- 2: Spule
- 4: Sockel
- 6: Spulenteil
- 8: Anschlussteil
- 10: Verbindungsvorrichtung
- 12: Ringstirnfläche
- 14: Ringstirnfläche
- 16: Spulenmantel
- 18: Unterseite
- 20: Aussparung
- 22: Umfangsfläche
- 24: Vorderseite
- 26: Oberseite
- 28: Aussparung
- 30: Außenbund
- 32: Kontaktelement
- 34: Kontaktelement
- 36: Endabschnitt
- 38: Endabschnitt
- 40: Kontaktstift
- 42: Kontaktstift
- 44: Aussparungsgrund
- 46: Ringaussparung
- 48: Ringfläche
- 50: Bohrung
- 52: Schraube
- 54: Außenmantelfläche
- 56: Gehäuseabschnitt
- 58: Bundfläche
- 60: Steckerbuchse
- 62: Durchgangsbohrung
- 64: Unterseite
- 66: Zentriervorsprung
- 68: Aussparung
- 70: Bodenfläche
- 72: Aussparung
- 74: Aussparung
- 76: Steg
- 78: Kontaktelement
- 80: Kontaktelement
- 82: Kontaktfläche
- 84: Kontaktfläche
- 86: Spulenkörper
- 88: Kunststoffring
- 90: Kunststoffring
- 92: Kontaktfahne
- 94: Kontaktfahne
- 96: Endabschnitt
- 98: Endabschnitt
- 100: Kunststoffmantel
- 102: Sockelteil
- 104: Unterseite
- 106: Außenmantelfläche
- 108: Oberseite
- 110: Ringaussparung
- 112: Spulenmantel
- 114: Stirnseite
- 116: Aussparung
- 117: O-Ring
- 118: Anschlussteil
- 120: Verbindungsvorrichtung
- 122: Durchgangsbohrung
- 124: Gewindebohrung
- 126: Anschluss
- 128: Anschluss
- 130: Anschluss
- 132: Anschluss
- 134: Anschluss
- 136: Anschluss

## Patentansprüche

1. Magnetspulenanordnung für elektromagnetisch betätigte Ventile mit einer gekapselten Spule (2), die über einen Sockel (4) mit einer Stromquelle elektrisch verbindbar ist, wobei dieser ein Anschlussteil (8; 118) und ein Spulenteil (6; 102) aufweist, die jeweils von Strompfaden durchsetzt sind, wobei Strompfade des Anschlussteils (8; 118) mit der Stromquelle elektrisch verbindbar sind, während Strompfade des an der Spule (2) festgelegten Spulenteils (6; 102) mit der Spule (2) elektrisch verbunden sind, und wobei das Anschlussteil (8; 118) und das Spulenteil (6; 102) zum elektrischen und mechanischen Verbinden über eine Verbindungsvorrichtung (10; 120) verbunden sind.

2. Magnetspulenanordnung nach Patentanspruch 1, wobei die Verbindungsvorrichtung (10; 120) standardisiert ist.

3. Magnetspulenanordnung nach Patentanspruch 1 oder 2, wobei das Spulenteil (6; 102) zwei, insbesondere etwa radial aus diesem auskragende, Kontaktelemente (32, 34; 92, 94) hat, die kraftschlüssig mit zwei Kontaktelementen (78, 80) des Anschlussteils (8; 118) zur elektrischen Kontaktierung der Strompfade verbunden sind.

4. Magnetspulenanordnung nach Patentanspruch 3, wobei Kontaktflächen (82, 84) der Kontaktelemente (78, 80) des Anschlussteils (8; 118) größer als Kontaktflächen der Kontaktelemente (32, 34; 92, 94) des Spulenteils (6, 102) sind.

5. Magnetspulenanordnung nach Patentanspruch 4, wobei die Kontaktflächen (82, 84) der Kontaktelemente (78, 80) des Anschlussteils (8; 118) halbringförmig ausgebildet sind und etwa auf einem gemeinsamen Ringradius angeordnet sind.

6. Magnetspulenanordnung nach einem der Patentansprüche 1 bis 5, wobei die Kontaktelemente (32, 34; 92, 94) des Spulenteils (6, 102) als Kontaktfahnen ausgebildet sind.

7. Magnetspulenanordnung nach einem der vorhergehenden Patentansprüche, wobei das Anschlussteil (8, 118) und das Spulenteil (6, 102) über eine Schraubverbindung verbunden sind.

8. Magnetspulenanordnung nach Patentanspruch 7, wobei das Anschlussteil (8, 118) eine oder mehrere Durchgangsbohrungen (62; 122) zur Durchführung von Schrauben (52) aufweist und/oder das Spulenteil (6; 102) eine oder mehrere Bohrungen (50; 124) zur Aufnahme von Schrauben (52) aufweist, womit das Anschlussteil (8; 118) und das Spulenteil (6; 102) relativ zueinander in unterschiedlichen Ausrichtungen verschraubbar sind.

9. Magnetspulenanordnung nach Patentanspruch 8, wobei die Bohrungen (50; 124) des Spulenteils (6; 102) auf einem die Kontaktelemente (32, 34; 92, 94) umgreifenden Teilkreis angeordnet sind.

10. Magnetspulenanordnung nach Patentanspruch 8 oder 9, wobei die Durchgangsbohrungen (62; 122) des Anschlussteils (8; 118) auf einem die Kontaktelemente (78, 80) umgreifenden Teilkreis angeordnet sind.

11. Magnetspulenanordnung nach einem der vorhergehenden Patentansprüche, wobei das Anschlussteil (8) einen Außenbund (30) hat, der im Wesentlichen bündig in eine Bundaufnahme (28) des Spulenteils (6) einsetzbar ist.

12. Magnetspulenanordnung nach Patentanspruch 11, wobei der Außenbund (30) des Anschlussteils (8) auf einer zum Spulenteil (6) weisenden Seite einen Zentriervorsprung (66) hat, der in eine Bohrung (50) des Spulenteils (6) eintauchbar ist.

13. Magnetspulenanordnung nach einem der vorhergehenden Patentansprüche, wobei das Anschlussteil (8; 118) und das Spulenteil (6; 102), insbesondere durch Ultraschallschweißen, verschweißt sind

14. Magnetspulenanordnung nach einem der vorhergehenden Patentansprüche, wobei zwischen dem Anschlussteil (8; 118) und dem Spulenteil (6; 102) ein Dichtring (117), insbesondere ein O-Ring, zum Abdichten der Strompfade angeordnet ist.

15. Kollektion von Magnetspulenanordnungen gemäß einem der vorhergehenden Patentansprüche, bei denen die Spulenteile (6; 102) unterschiedliche Baugrößen und/oder die Anschlussteile (8; 118) unterschiedliche elektrische Anschlüsse (126, 128, 130, 132, 134, 136) für die Stromquelle aufweisen, wobei die elektrische und/oder mechanische Verbindung zwischen dem Spulenteil (6; 102) und dem Anschlussteil (8; 118) bei allen Magnetspulenanordnungen identisch ausgebildet ist.
